# EUROPÄISCHE PATENTSCHRIFT

(11) **EP 2 427 668 B1**
(45) Veröffentlichungstag und Bekanntmachung des Hinweises auf die Patenterteilung: **12.03.2014**
(21) Anmeldenummer: 10700307.1
(22) Anmeldetag: 16.01.2010
(51) Int. Cl.: F16D 25/08, F04B 35/01

(54) **KOMPRESSOR MIT KUPPLUNGSEINRICHTUNG**
COMPRESSOR HAVING A CLUTCH DEVICE
COMPRESSEUR À DISPOSITIF DE COUPLAGE

(30) Priorität: 06.05.2009 DE 102009020070
(43) Veröffentlichungstag der Anmeldung: 14.03.2012
(73) Patentinhaber: WABCO GmbH, 30453 Hannover (DE)
(72) Erfinder: GROSSKOPF, Joachim, 30952 Ronnenberg (DE); STOFFELS, Ralf, 29581 Gerdau (DE); STUMBERG, Ingo, 30625 Hannover (DE)
(74) Vertreter: Lauerwald, Jörg
(86) Internationale Anmeldenummer: PCT/EP2010/000227
(87) Internationale Veröffentlichungsnummer: WO 2010/127727

(56) Entgegenhaltungen:
- EP-A1- 1 995 482
- EP-A2- 1 950 445
- US-A- 4 657 127

## Beschreibung

Die Erfindung betrifft einen Kompressor für die Drucklufterzeugung in einem Fahrzeug gemäß dem Oberbegriff des Patenanspruchs 1. Der Kompressor ist über eine Kupplungseinrichtung, zum Beispiel eine Abschaltkupplung, von einem Antrieb trennbar oder damit verbindbar.

Ein gattungsgemäßer Kompressor ist zum Beispiel aus der DE 20 2006 019 190 U1 oder der EP 1 950 445 A2 bekannt.

Die Verwendung der bekannten Abschaltkupplung an Kompressoren hat den Vorteil, dass der Kompressor zur Energieeinsparung von einem Antrieb, zum Beispiel dem Antriebsmotor des Fahrzeuges, getrennt werden kann, wenn keine Drucklufterzeugung erforderlich ist. Ohne eine solche Abschaltkupplung war es bisher üblich, den Kompressor immer mit dem Antriebsmotor mitlaufen zu lassen und in Phasen, in denen keine Drucklufterzeugung erforderlich war, lediglich pneumatisch neutral zu schalten.

Bei bekannten Kompressoren war es erforderlich, diese konstruktiv auf die Kupplungseinrichtung anzupassen, so dass eine Einheit aus Kompressor und Kupplungseinrichtung entsteht. Eine Anpassung der Konstruktion des Kompressors erfordert allerdings jeweils eine relativ teure und aufwendige Änderung der Produktionsanlagen, insbesondere der Gussformen.

Der Erfindung liegt daher die Aufgabe zu Grunde, die Schnittstelle zwischen dem Kompressor und der Kupplungseinrichtung zu verbessern, so dass der Anpassungsaufwand verringert wird.

Diese Aufgabe wird durch die in den unabhängigen Anspruch angegebene Erfindung gelöst. Die Unteransprüche enthalten vorteilhafte Ausgestaltungen der Erfindung.

Die Erfindung hat den Vorteil, ein modulares Konzept für den Kompressor und die Kupplungseinrichtung anzugeben. Der erfindungsgemäße Kompressor kann sowohl ohne als auch mit Kupplungseinrichtung verwendet und verkauft werden. Die Kupplungseinrichtung kann als separates Zusatz-Modul mit dem Kompressor verbunden werden. Hierdurch können Kompressoren mit einheitlichem Gehäuse für Anwendungen sowohl mit als auch ohne Kupplungseinrichtung gefertigt werden, was zu einer Fertigungsrationalisierung führt.

Erfindungsgemäß ist ein ringförmiges, topfartiges Aufnahmeelement vorgesehen, das als separates Bauteil hergestellt und bereitgestellt werden kann. Das topfartige Aufnahmeelement ist hinsichtlich seiner Form an den Schnittstellenbereich des Kompressors angepasst und kann daran auf einfache Weise montiert werden. Durch die Verwendung unterschiedlicher topfartiger Aufnahmeelemente als Adapter können unterschiedliche Kombinationen von Kompressoren und Kupplungseinrichtungen miteinander verbunden werden. Die relativ aufwendige Anpassung des Kompressorgehäuses oder von Teilen der Kupplungseinrichtung wird damit entbehrlich.

Zusätzlich ist das topfartige Aufnahmeelement zylinderartig ausgebildet. Das topfartige Aufnahmeelement ist zur Aufnahme eines Druckmittelbeaufschlagbaren Kolbens zur Betätigung der Kupplungseinrichtung ausgebildet. Als Druckmittel kommen z.B. Druckluft oder Drucköl in Frage. Hierdurch dient das topfartige Aufnahmeelement zusätzlich zur Integration des für die Kupplungsbetätigung erforderlichen Kolbens. Vorteilhaft kann ein in dem Aufnahmeelement vormontierter Betätigungskolben als eine Baueinheit an dem Kompressor angeordnet werden. Hierdurch ist die Anordnung der Kupplungseinrichtung an dem Kompressor montagefreundlich möglich. Zudem kann eine vorab auf Funktion überprüfte Baueinheit aus topfartigem Aufnahmeelement und Betätigungskolben verwendet werden, was den Prüfaufwand an der fertigen Kompressor-Kupplungs-Einheit verringert.

Gemäß einer vorteilhaften Weiterbildung der Erfindung ist das topfartige Aufnahmeelement in einer Vertiefung des Kompressorgehäuses durch einen gewellten Sicherungsring fixierbar. Durch die Verwendung eines gewellten Sicherungsrings ist neben einer sicheren Befestigung zugleich eine spielfreie Montage des topfartigen Aufnahmeelements möglich. In Folge der gewellten Kontur des Sicherungsrings wird eine gewisse Vorspannung auf das topfartige Aufnahmeelement ausgeübt, so dass dies spielfrei gehalten wird.

Gemäß einer vorteilhaften Weiterbildung der Erfindung ist die Kupplungseinrichtung mittels einer Bundmutter auf der Kurbelwelle befestigbar. Vorteilhaft kann hierbei eine relativ flache Bundmutter eingesetzt werden. Hierdurch ist eine einfache und zugleich Platz sparende Montage der Kupplungseinrichtung auf der Kurbelwelle möglich.

Weitere vorteilhafte Ausgestaltungen der Erfindung werden nachfolgend unter Angabe weiterer Vorteile unter Bezugnahme auf die Zeichnungen näher erläutert.

Die Erfindung wird nachfolgend anhand von Ausführungsbeispielen unter Verwendung von Zeichnungen näher erläutert.

Es zeigen:
- Figur 1: einen Zweizylinder-Kompressor in schematischer Darstellung und
- Figur 2: die Schnittstelle Kompressor / Kupplungseinrichtung in Schnittdarstellung und
- Figur 3: eine wellenseitige Ansicht des Kompressors.

In den Figuren werden gleiche Bezugszeichen für einander entsprechende Elemente verwendet.

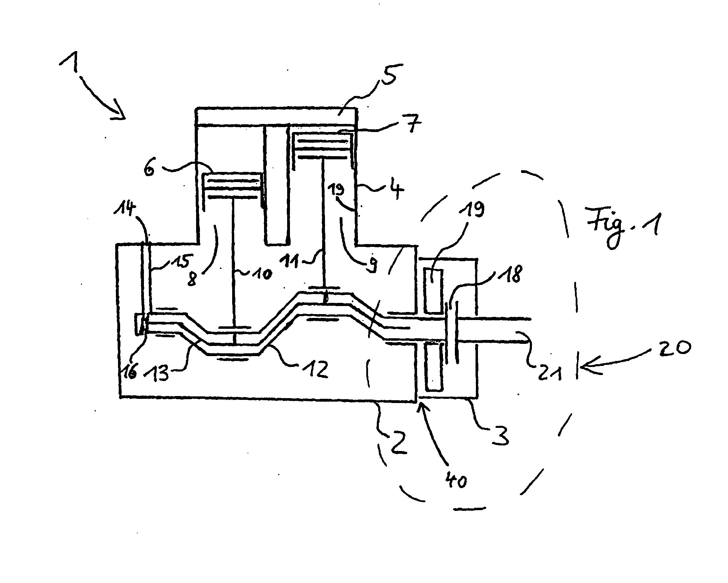

Die Figur 1 zeigt einen Kompressor 1 mit einem Kompressorgehäuse 2 und eine an dem Kompressorgehäuse 2 angeordnete Kupplungseinrichtung 3. Die Kupplungseinrichtung 3 ist als pneumatisch betätigbare Abschaltkupplung ausgebildet. Hierfür weist die Kupplungseinrichtung 3 einen pneumatischen Betätigungszylinder 19 auf, über den bei pneumatischer Beaufschlagung Koppelmittel 18, z. B. Kupplungslamellen oder Kupplungsscheiben, aneinander pressbar oder voneinander trennbar sind. Die Kupplungseinrichtung 3 verbindet eine Kurbelwelle 12 des Kompressors 1 über eine Kupplungs-Antriebswelle 21 mit einer Abtriebswelle einer nicht näher dargestellten Antriebseinrichtung eines Fahrzeuges, zum Beispiel dem Fahrzeugmotor. Die Kupplungs-Antriebswelle 21 kann mit einer Aufnahme für ein Zahnrad für einen Zahnrad-Antrieb versehen sein.

Der Kompressor 1 weist einen ersten Zylinder 8 und einen zweiten Zylinder 9 auf. In dem ersten Zylinder 8 ist ein erster Kolben 6 angeordnet. In dem zweiten Zylinder 9 ist ein zweiter Kolben 7 angeordnet. Der erste Kolben 6 ist über ein erstes Pleuel 10 und entsprechende Lager mit der Kurbelwelle 12 verbunden. Der zweite Kolben 7 ist über ein zweites Pleuel 11 ebenfalls über entsprechende Lager mit der Kurbelwelle 12 verbunden. Die Lagerung der Kolben 6, 7 und der Kurbelwelle 12 in den entsprechenden Lageraugen der Pleuel 10, 11 ist in der Figur 1 der Einfachheit halber nur schematisch dargestellt. In der Praxis werden hierfür geeignete Gleit- oder Wälzlager eingesetzt. Die Zylinder 8, 9 sind in einem Zylindergehäuse 4 des Kompressors 1 angeordnet. Das Zylindergehäuse 4 ist Teil des Gehäuses 2.

Auf dem Zylindergehäuse 4 ist ein Ventil- und Steuerblock 5 angeordnet, der beispielsweise die Einlass- und Auslassventile für die Druckluftansaugung und für die Druckluftabgabe an nachgeschaltete Einheiten wie z.B. Druckluftvorratsbehälter beinhaltet. Der Ventilblock 5 kann im Einzelnen beispielsweise gemäß der DE 197 451 18 A1 ausgebildet sein.

Zur Schmierung der Kolben 6, 7 in den jeweiligen Zylindern 8, 9 weist der Kompressor 1 eine Schmiermittelversorgung auf. Als Schmiermittel wird beispielsweise Öl verwendet, zum Beispiel das Motoröl des Fahrzeugmotors. Die Schmiermittelversorgung des Kompressors 1 weist einen Schmiermittelanschluss 14 auf, der mit der Motoröl-Versorgung des Fahrzeugmotors zu verbinden ist. Von dem Schmiermittelanschluss 14 führt ein erster Schmiermittelkanal 15 durch das Gehäuse 2 zu einer um die Kurbelwelle 12 umlaufenden Schmiermittel-Versorgungsnut 16. Die Schmiermittel-Versorgungsnut 16 ist mit einem Schmiermittelversorgungs-Kanalabschnitt 13 verbunden, der in Form eines Hohlkanals innerhalb der Kurbelwelle 12 verläuft. Der Kanalabschnitt 13 steht mit Auslassstellen für das Schmiermittel im Bereich der Pleuel 10, 11 in Verbindung. Die Verwendung der umlaufenden Schmiermittel-Versorgungsnut 16 hat den Vorteil, dass sich das Schmiermittel auf dem Umfang der Kurbelwelle 12 verteilen kann und hierdurch relativ schnell und gleichmäßig in den Schmiermittel-Kanalabschnitt 13 eingespeist werden kann.

Das Schmiermittel ist üblicherweise druckbeaufschlagt und steht unter einem Druck von etwa 3 bis 4 bar. Hierdurch ist eine Schmiermittelversorgung unabhängig von der Bewegung des Kompressors möglich, d.h. auch bei stehendem Kompressor.

Wie der Figur 1 zudem zu entnehmen ist, ragt in einer vorteilhaften Ausgestaltung der Erfindung die Kupplungseinrichtung 3 über das Gehäuse 2 des Kompressors 1 hinaus, das heißt die Kupplungseinrichtung ist nicht, wie aus DE 20 2006 019 190 U1 bekannt, in das Gehäuse integriert. Die Kupplungseinrichtung 3 ragt zumindest mit einem die Koppelmittel 18, z.B. den Kupplungsscheiben - oder Lamellenteil, beinhaltenden Bereich aus dem Gehäuse 2 des Kompressors 1 hinaus. Die äußere Anordnung der Kupplungseinrichtung bietet den Vorteil der Modularität. Der erfindungsgemäße Kompressor kann daher baugleich sowohl mit als auch ohne Kupplungseinrichtung verwendet werden. Bei Bedarf wird die Kupplungseinrichtung 3 lediglich an das Gehäuse 2 des Kompressors 1 angeschraubt.

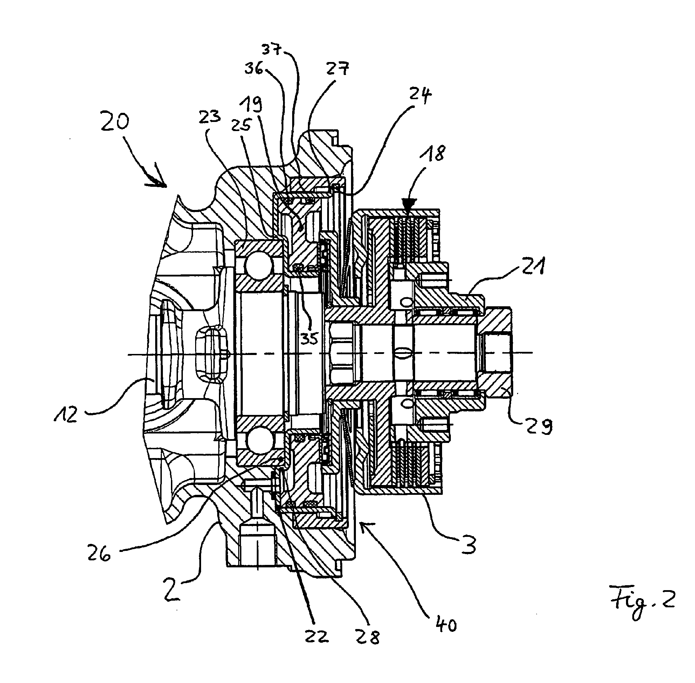

Der in der Figur 1 gestrichelt umrandete Bereich 20 ist in der Figur 2 nach Art einer Ausschnittsvergrößerung detailliert dargestellt. Die Figur 2 zeigt einen Schnittstellenbereich 40 des Kompressors 1 zu der Kupplungseinrichtung 3 in Horizontal-Schnittdarstellung. Wie erkennbar ist, ist die Kurbelwelle 12 in dem Gehäuse 2 durch ein Kugellager 23 gelagert. In einer Vertiefung des Kompressorgehäuses ist ein ringförmiges, topfartiges Aufnahmeelement 22 angeordnet, das durch einen gewellten Sicherungsring 24 in der dargestellten Position gehalten wird. Hierfür weist das topfartige Aufnahmeelement 22 einen ringförmig nach außen umgebördelten Rand 27 auf, auf den der Sicherungsring 24 aufgesetzt ist.

Das topfartige Aufnahmeelement 22 dient zugleich als Zylinder für einen Druckluft-betätigbaren Kolben 19. Der Druckluft-betätigbare Kolben 19 wird durch Dichtungen 35, 36 an der Innenseite und der Außenseite gegenüber dem topfartigen Aufnahmeelement 22 abgedichtet. An der Außenseite des Kolbens 19 befindet sich noch ein Führungsband 37. Der Kolben 19 dient zur Betätigung der Kupplungseinrichtung 3. Bei Druckluftbeaufschlagung fährt der Kolben 19 in der Darstellung gemäß Figur 2 nach rechts aus und öffnet hierdurch die Kupplungseinrichtung 3, bzw. die Koppelmittel 18. Dann ist die Kurbelwelle 12 von der mit der Antriebseinrichtung verbundenen Antriebswelle 21 der Kupplungseinrichtung 3 getrennt, so dass der Kompressor 1 nicht angetrieben ist.

Wie der Figur 2 zudem entnehmbar ist, ragt das Lager 23 mit einem Abschnitt 26 aus dem Kompressorgehäuse 2 hinaus. Der Abschnitt 26 dient zugleich als Zentriermittel für das topfartige Aufnahmeelement 22. Hierfür ist das topfartige Aufnahmeelement 22 mit einem Zentrieransatz, d. h. einer ringförmigen Vertiefung 25, 28, versehen, die hinsichtlich ihres Durchmessers an den Außendurchmesser des Lagers 23 angepasst ist. Durch den Zentrieransatz 25, 28 sowie das Zentriermittel 26 ist eine einfache und schnelle zentrierte Montage des topfartigen Aufnahmeelements 22 an dem Kompressorgehäuse 2 möglich. Vorteilhaft dient das Lager 23 zugleich zur Lagerung der Welle 21 der Kupplungseinrichtung 3. Hierdurch sind neben den ohnehin in der Kupplungseinrichtung 3 vorgesehenen Nadellagern für einen Freilauf keine zusätzlichen Lager und kein weiteres Gehäuse erforderlich, was eine relativ preisgünstige Realisierung der Erfindung fördert.

Die Kupplungseinrichtung 3 ist mittels der Bundmutter 29 auf der Kurbelwelle 12 befestigt.

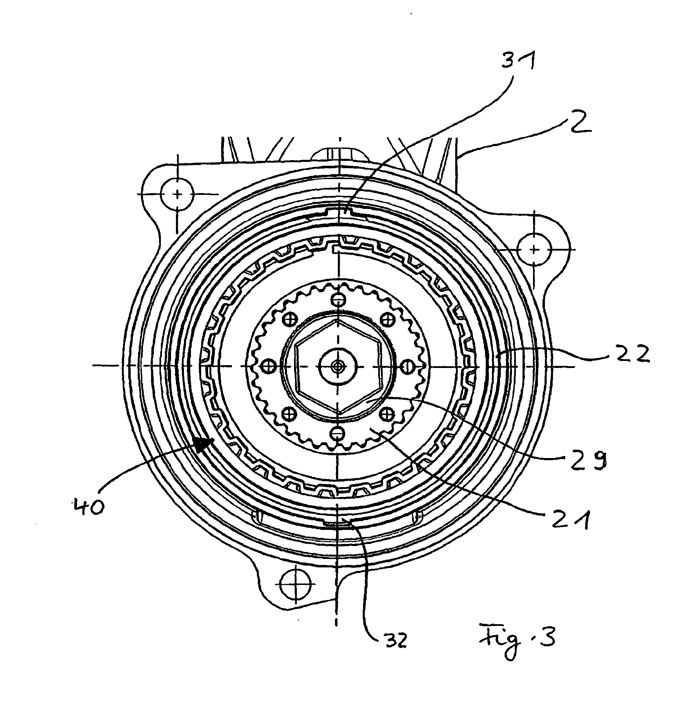

Die Figur 3 zeigt den Kompressor 1 ausschnittsweise in einer wellenseitigen Ansicht bei nicht montierter Kupplungseinrichtung 3. Das topfförmige Aufnahmeelement 22 weist Verdrehsicherungsmittel in Form von vorstehenden Nasen auf, die im Eingriff mit in dem Kompressorgehäuse angeformten, komplementär geformten Verdrehsicherungsmitteln 31, 32 stehen. Die Verdrehsicherungsmittel 31, 32 sind als Vertiefungen in dem Kompressorgehäuse 2 ausgebildet. Denkbar ist auch, die Verdrehsicherungsmittel 31, 32 in dem Kompressorgehäuse 2 als vorstehende Sicherungsnasen auszubilden und die komplementär dazu geformten Verdrehsicherungsmittel in dem topfartigen Aufnahmeelement 22 als Vertiefungen auszubilden. Durch die Verdrehsicherungsmittel kann das topfartige Aufnahmeelement 22 gegen ein Verdrehen gegenüber dem Kompressor 1 gesichert werden.

Wie aus den vorstehenden Erläuterungen erkennbar ist, stellt das topfartige Aufnahmeelement 22 eine wesentliche Verbesserung im Bereich der Schnittstelle zwischen einem Kompressor und einer Kupplungseinrichtung dar. Das topfartige Aufnahmeelement ist sozusagen ein Multifunktionsteil, das eine Vielzahl von konstruktiven Verbesserungen in dem Schnittstellenbereich 40 miteinander integriert. Vorteilhaft kann das topfartige Aufnahmeelement relativ preisgünstig als Metall-Tiefziehteil hergestellt werden. Hierdurch ist die Erfindung kostengünstig realisierbar.

## Patentansprüche

1. Kompressor (1) für die Drucklufterzeugung in einem Fahrzeug, mit einer Kurbelwelle (12) und einem Schnittstellenbereich (40), der zur Befestigung einer Kupplungseinrichtung (3) eingerichtet ist, mittels der die Kurbelwelle (12) des Kompressors (1) mit einer Antriebseinrichtung verbindbar bzw. davon trennbar ist, wobei der Schnittstellenbereich (40) zur Aufnahme eines ringförmigen, topfartigen Aufnahmeelements (22) ausgebildet ist, und das topfartige Aufnahmeelement (22) zylinderartig zur Aufnahme eines Druckmittel-beaufschlagbaren Kolbens (19) zur Betätigung der Kupplungseinrichtung (3) ausgebildet ist, **dadurch gekennzeichnet, dass** der Kompressor (1) in dem Schnittstellenbereich (40) ein Kurbelwellen-Lager (23) aufweist, das bei am Kompressor (1) montierter Kupplungseinrichtung (3) zugleich ein Lager der Kupplungseinrichtung (3) ist.

2. Kompressor nach Anspruch 1, **dadurch gekennzeichnet, dass** das topfartige Aufnahmeelement (22) in einer Vertiefung des Kompressorgehäuses durch einen gewellten Sicherungsring (24) fixierbar ist.

3. Kompressor nach wenigstens einem der vorhergehenden Ansprüche, **dadurch gekennzeichnet, dass** die Kupplungseinrichtung (3) mittels einer Bundmutter (29) auf der Kurbelwelle (12) befestigbar ist.

4. Kompressor nach wenigstens einem der vorhergehenden Ansprüche, **dadurch gekennzeichnet, dass** die Kupplungseinrichtung (3) an dem Kompressorgehäuse (2) angeordnet ist und zumindest mit einem wenigstens ein Koppelmittel (18) beinhaltenden Bereich aus dem Gehäuse (2) des Kompressors (1) herausragt.

5. Kompressor nach wenigstens einem der vorhergehenden Ansprüche, **dadurch gekennzeichnet, dass** der Kompressor (1) in dem Schnittstellenbereich (40) Verdrehsicherungsmittel (31, 32) aufweist, die mit komplementär geformten Verdrehsicherungsmitteln des topfartigen Aufnahmeelements (22) in Eingriff bringbar sind, wodurch im an dem Kompressor (1) montierten Zustand das topfartige Aufnahmeelement (22) über die Verdrehsicherungsmittel (31, 32) gegen Verdrehen gesichert ist.

6. Kompressor nach wenigstens einem der vorhergehenden Ansprüche, **dadurch gekennzeichnet, dass** das Kurbelwellen-Lager (23) aus dem Gehäuse (2) des Kompressors (1) zumindest zum Teil herausragt, wobei der herausragende Teil ein Zentriermittel (26) zur Zentrierung des topfartigen Aufnahmeelements (22) auf der Kurbelwelle (12) ist.

7. Kompressor nach Anspruch 6, **dadurch gekennzeichnet, dass** das Zentriermittel (26) einem Zentrieransatz (25, 28) an dem topfartigen Aufnahmeelement (22) zugeordnet ist und bei Montage des topfartigen Aufnahmeelements (22) an dem Kompressor (1) mit dem Zentrieransatz (25, 28) zur Anlage kommt.

## Claims

1. Compressor (1) for generating compressed air in a vehicle, having a crankshaft (12) and having an interface region (40) which is designed for fastening to a clutch device (3) by means of which the crankshaft (12) of the compressor (1) can be connected to and separated from a drive device, wherein the interface region (40) is designed for receiving an annular, pot-shaped receiving element (22), and the pot-shaped receiving element (22) is of cylinder-shaped design in order to receive a piston (19), which can be acted on with pressure medium, for actuating the clutch device (3), **characterized in that** the compressor (1) has, in the interface region (40), a crankshaft bearing (23) which, when the clutch device (3) is mounted on the compressor (1), is simultaneously a bearing of the clutch device (3).

2. Compressor according to Claim 1, **characterized in that** the pot-shaped receiving element (22) can be fixed in a depression of the compressor housing by means of a corrugated locking ring (24).

3. Compressor according to at least one of the preceding claims, **characterized in that** the clutch device (3) can be fastened on the crankshaft (12) by means of a collar nut (29).

4. Compressor according to at least one of the preceding claims, **characterized in that** the clutch device (3) is arranged on the compressor housing (2) and projects out of the housing (2) of the compressor (1) at least with a region comprising at least one coupling means (18).

5. Compressor according to at least one of the preceding claims, **characterized in that** the compressor (1) has, in the interface region (40), rotation-preventing locking means (31, 32) which can be placed in engagement with complementarily shaped rotation-preventing locking means of the pot-shaped receiving element (22), as a result of which, when mounted on the compressor (1), the pot-shaped receiving element (22) is locked so as to be prevented from rotating by means of the rotation-preventing locking means (31, 32).

6. Compressor according to at least one of the preceding claims, **characterized in that** the crankshaft bearing (23) protrudes at least partially out of the housing (2) of the compressor (1), wherein the protruding part is a centring means (26) for centring the pot-shaped receiving element (22) on the crankshaft (12).

7. Compressor according to Claim 6, **characterized in that** the centring means (26) is assigned to a centring shoulder (25, 28) on the pot-shaped receiving element (22) and comes into contact with the centring shoulder (25, 28) when the pot-shaped receiving element (22) is mounted on the compressor (1).

## Revendications

1. Compresseur (1) pour produire de l'air comprimé dans un véhicule, comprenant un vilebrequin (12) et une région d'interface (40) qui est prévue pour la fixation d'un dispositif d'accouplement (3) au moyen duquel le vilebrequin (12) du compresseur (1) peut être connecté à un dispositif d'entraînement ou en être séparé, la région d'interface (40) étant réalisée pour recevoir un élément de réception (22) de forme annulaire, de type pot, et l'élément de réception de type pot (22) étant réalisé sous forme cylindrique pour recevoir un piston (19) pouvant être sollicité par un fluide sous pression afin d'actionner le dispositif d'accouplement (3), **caractérisé en ce que** le compresseur (1) présente, dans la région d'interface (40), un palier de vilebrequin (23) qui constitue aussi un palier du dispositif d'accouplement (3) lorsque le dispositif d'accouplement (3) est monté sur le compresseur (1).

2. Compresseur selon la revendication 1, **caractérisé en ce que** l'élément de réception de type pot (22) peut être fixé dans un renfoncement du boîtier de compresseur par une bague de fixation ondulée (24).

3. Compresseur selon au moins l'une quelconque des revendications précédentes, **caractérisé en ce que** le dispositif d'accouplement (3) peut être fixé sur le vilebrequin (12) au moyen d'un écrou à embase (29).

4. Compresseur selon au moins l'une quelconque des revendications précédentes, **caractérisé en ce que** le dispositif d'accouplement (3) est disposé sur le boîtier de compresseur (2) et fait saillie au moins avec au moins une région contenant un moyen de couplage (18) hors du boîtier (2) du compresseur (1).

5. Compresseur selon au moins l'une quelconque des revendications précédentes, **caractérisé en ce que** le compresseur (1) présente, dans la région d'interface (40), des moyens de fixation en rotation (31, 32) qui peuvent être amenés en prise avec des moyens de fixation en rotation formés de manière complémentaire de l'élément de réception de type pot (22), de sorte que dans l'état monté sur le compresseur (1), l'élément de réception de type pot (22) soit fixé contre toute rotation par le biais des moyens de fixation en rotation (31, 32).

6. Compresseur selon au moins l'une quelconque des revendications précédentes, **caractérisé en ce que** le palier-vilebrequin (23) fait saillie hors du boîtier (2) du compresseur (1) au moins en partie, la partie saillante étant un moyen de centrage (26) pour le centrage de l'élément de réception de type pot (22) sur le vilebrequin (12).

7. Compresseur selon la revendication 6, **caractérisé en ce que** le moyen de centrage (26) est associé à un insert de centrage (25, 28) sur l'élément de réception de type pot (22) et lors du montage de l'élément de réception (22) de type pot, vient en appui sur le compresseur (1) avec l'insert de centrage (25, 28).
